Europäisches Patentamt

European Patent Office

Office européen des brevets

(11) Veröffentlichungsnummer: **0 175 095 B1**

(12) **EUROPÄISCHE PATENTSCHRIFT**

(45) Veröffentlichungstag der Patentschrift: **11.03.92**

(21) Anmeldenummer: **85109321.1**

(22) Anmeldetag: **25.07.85**

(51) Int. Cl.⁵: **G06F 13/36**

(54) Datenübertragungsverfahren über einen Multiprozessorbus.

(30) Priorität: **23.08.84 DE 3431043**

(43) Veröffentlichungstag der Anmeldung:
**26.03.86 Patentblatt 86/13**

(45) Bekanntmachung des Hinweises auf die
Patenterteilung:
**11.03.92 Patentblatt 92/11**

(84) Benannte Vertragsstaaten:
**AT DE FR GB IT NL SE**

(56) Entgegenhaltungen:
EP-A- 0 035 731
EP-A- 0 051 794
EP-A- 0 080 369

ELECTRONICS INTERNATIONAL, Band 57, Nr.
6, 22. März 1984, Seiten 132-138, New York,
US; C. MacKENNA et al.: "Backup support
gives VMEbus powerful multprocessing architecture"

ELECTRONIC COMPONENTS & APPLICA-
TIONS, Band 5, Nr. 4, September 1984, Seiten
214-221, Eindhoven, NL; A. MOELANDS: "I2C
bus in consumer applications"

PROCEEDINGS OF THE IEEE 1981 NATIONAL

AEROSPACE AND ELECTRONICS CONFE-
RENCE, Band 1, 19.-21. Mai 1981, Seiten
309-317, IEEE, New York, US; S.J. LARIMER et
al.: "A solution to bus contention in a system of autotonomous microprocessors"

IMPLEMENTING FUNCTIONS, EUROMICRO
1981, 8.-10. September 1981, Seiten 35-41,
North Holland Publishing Co., NL; H. RIAD et
al.: "A distributed virtual support information
exchange system"

(73) Patentinhaber: **SIEMENS AKTIENGESELL-
SCHAFT
Wittelsbacherplatz 2
W-8000 München 2(DE)**

(72) Erfinder: **Geiger, Gerhard, Dipl.-Ing.
Hohenwaldeckstrasse 7
W-8162 Schliersee(DE)**
Erfinder: **Strafner, Michael, Dipl.-Ing.
St. Cajetanstrasse 14
W-8000 München 80(DE)**

## Beschreibung

Die Erfindung betrifft ein Verfahren zum bidirektionalen Datenaustausch über einen Multiprozessorbus gemäß dem Oberbegriff des Patentanspruchs 1.

Busstrukturen sind die Verbindungslinien zwischen den Bausteinen und Baugruppen eines Mikro- oder Minicomputersystems, welches mehrere Prozessoren, Speicher und Peripherieeinheiten aufweisen kann. Der Aufbau eines Bussystems und das zugehörige Verfahren zum Betreiben richten sich nach den verwendeten Bausteinen und dem Einsatzgebiet. Ein wesentliches Merkmal zur Unterscheidung von Bussystemen ist die Art und Weise, mit welcher der Zugriff der einzelnen angeschlossenen Komponenten festgelegt ist. Bei der Busvergabe nach dem Masterprinzip ist jeder angeschlossene Baustein in der Lage, einen Datentransfer an einen adressierten Baustein (Slave) einzuleiten. Wenn dabei mehrere Bausteine gleichzeitig zugreifen, muß die Busvergabe über eine Prioritätssteuerung festgelegt werden. Weitere bekannte Verfahren bestehen darin, die Busvergabe zentral zu steuern oder eine fest verdrahtete Prioritätskette festzulegen.

Ein weiteres Merkmal liegt in der Architektur von Daten-, Adreß- und Steuerbussen, die parallel oder seriell betrieben werden können.

Schließlich muß für jedes Bussystem das Format der übertragenen Daten festgelegt sein. Bei einer blockweisen Übertragung folgen dabei auf ein Startbit die Quellen- und Senkenadresse und die eigentliche Information. Diese Blöcke können beispielsweise im Zeitmultiplexbetrieb durch einen sog. PCM-Pulsrahmen festgelegt werden, der von einem Synchronisiersignal abgeleitet ist.

Wird ein Multiprozessorbus parallel im Zeitmultiplexverfahren betrieben, so treten Zugriffsprobleme auf, wenn gleichzeitig mehrere Prozessoren Daten übertragen wollen. Es ist dann entweder ein zusätzlicher, als übergeordnete Steuerung dienender Arbiter erforderlich und/oder es müssen zusätzliche Steuerleitungen und Prioritätsleitungen vorgesehen werden. Ein Beispiel für eine derartige Busstruktur mit mehreren Teilsystemen ist in Elektronik 1982, Heft 10, Seite 90 bis 96 beschrieben.

Eine weitere Möglichkeit zur Verhinderung von Kollisionen kann darin bestehen, daß jeder Prozessor spontan mit der Datenübertragung beginnt, wobei er laufend überprüft, ob die gesendeten Daten tatsächlich auf dem Bus anstehen, d.h. übertragen werden, oder ob ein anderer Prozessor sich durchgesetzt hat. In diesem Fall bricht er die Übertragung zugunsten des anderen Senders ab. Nachteilig dabei ist, daß die Gefahr eines Datenverlustes nicht auszuschließen ist, bzw. daß für jeden Prozessor Maßnahmen vorgesehen sind, durch welche bei einem Abbruch der Übertragung der Verlust von Daten verhindert wird.

Aus der EP-A-0 051 794 ist ein Verfahren zum bidirektionalen, im Zeitmultiplexbetrieb durchgeführten Datenaustausch zwischen integrierten Bausteinen über einen Multiprozessorbus, bei welchem durch ein Pulsrahmen-Synchronisiersignal zwei Zeitkanäle für die Übertragung von Buszugriffs-Steuerinformationen und Daten festgelegt werden, so daß ein einen Buszugriff wünschender Baustein zunächst den Monitorkanal nach eventuell vorhandener Steuerinformation überprüft und, falls der Multiprozessorbus frei ist, die eigene Steuerinformation setzt und die Daten überträgt, bekannt, das diesen Nachteil nicht aufweist.

Der Erfindung lag die Aufgabe zugrunde, ein einfaches und sicheres Verfahren der eingangs genannten Art anzugeben. Diese Aufgabe wird gemäß den Merkmalen des Anspruches 1 gelöst.Weiterbildungen der Erfindung ergeben sich aus den Unteransprüchen.

Die Erfindung macht sich die im Zeitmultiplexbetrieb zur Verfügung stehenden Rahmensynchronisiersignale zu Nutze. Innerhalb eines Rahmens dient die in einem fest vorgegebenen Zeitschlitz liegende Information zur Steuerung des Busses. Vorzugsweise wird das auf die wirksame Flanke des Synchronisiersignals folgende Bit zur Busanforderung verwendet. Durch weitere Bits kann die Priorität festgelegt werden. Das Verfahren zeichnet sich durch eine einfache Realisierbarkeit bei hoher Sicherheit der zu übertragenden Daten aus.

Im folgenden wird die Erfindung anhand eines Ausführungsbeispieles weiter beschrieben.

Fig. 1    zeigt schematisch die Busstruktur,
Fig. 2    zeigt das Zeitverhalten der zu Fig. 1 und Fig. 3 gehörenden Signale,
Fig. 3    zeigt Einzelheiten der Anordnungen nach Fig. 1 und 2.
Fig. 4    zeigt den Ablauf eines Buszugriffs.

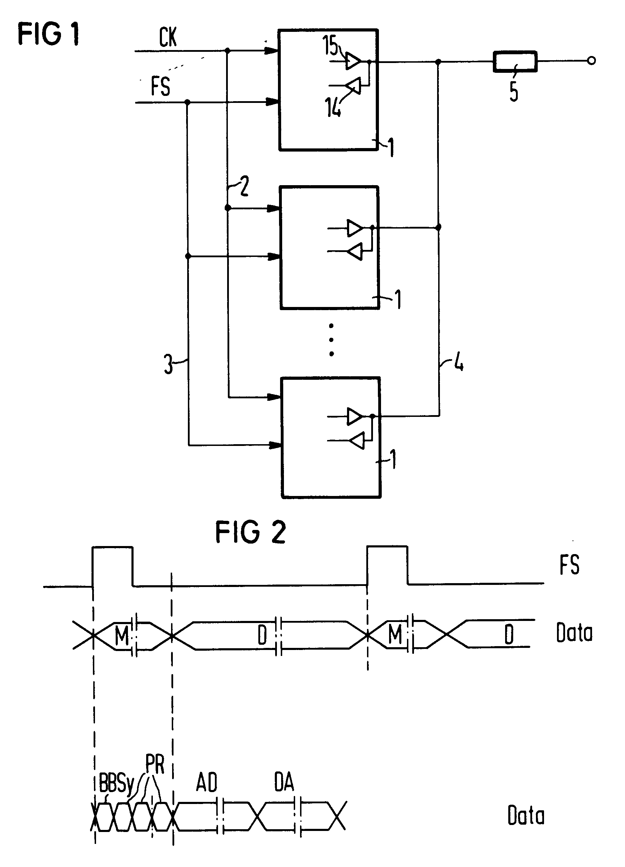

Die Anordnung in Fig. 1 besteht aus mehreren integrierten Bausteinen 1, welche über einen seriellen Datenbus 4 (Multiplexerbus) Daten austauschen. Alle Bausteine 1 werden über eine Taktleitung 2 mit einem Takt CK beaufschlagt und synchron betrieben. Die Datenübertragung auf dem Datenbus 4 erfolgt bidirektional im Zeitmultiplexverfahren, wobei die Pulsrahmen wie in einem PCM-System durch ein Rahmensynchronisiersignal FS auf einer Synchronisierleitung 3 festgelegt sind. Jeder Baustein 1 kann sowohl als Sender als auch als Empfänger betrieben werden. Derjenige der Bausteine 1, der sich auf dem Datenbus 4 durchsetzt, wird als Master bezeichnet. Der oder die von ihm adressierten Bausteine werden Slaves genannt. Die Bausteine 1 senden/empfangen über sog. "open drain" bzw. "open collector" 15, 14 Ausgangsstufen. Dies hat zur Folge, daß sich ein log. L Signal durchsetzt. Der Datenbus 4 ist über einen sog. Pull-up-Widerstand 5 mit einer positiven Betriebsspannung beaufschlagt.

Das Zeitdiagramm der Fig. 2 zeigt über der Zeit das Rahmensynchronisiersignal FS und darunter prinzipiell den Signalverlauf auf dem Datenbus 4. Innerhalb des durch die positiven Flanken des Synchronisiersignals FS definierten Pulsrahmens wird ein erster Zeitkanal M (Monitorkanal) mit Steuerinformation und ein zweiter Zeitkanal D (Datenkanal) gebildet. Wie Fig. 2 weiter zeigt, enthält der Monitorkanal M ein aus einem Bit BBSY bestehendes Belegungs-Codeelement, über welches der Wunsch eines Bausteines 1 auf einen Buszugriff bzw. ein aktueller Buszugriff auf dem Bus 4 signalisiert wird. Ferner enthält der Monitorkanal M mehrere die Priorität festlegende Bits PR. Im Datenkanal D sind auf bekannte Weise die zu übertragenden Daten DA und zugehörigen Adressen AD enthalten.

Im folgenden wird der Ablauf des Buszugriffs beschrieben. Wünscht ein Baustein 1 Zugriff auf den Datenbus 4, so überprüft er den Monitorkanal M und setzt das Belegungs-Codeelement BBSY und eine eigene Prioritätsinformation $PR_i$, wenn der Datenbus 4 frei ist. Jeder am Datenbus 4 angeschlossene Baustein 1 prüft nach Aufforderung (Signal BRQ) durch eine nicht wiedergegebene Einheit, beispielsweise von einem Fernsprechendgerät, über einen Eingangsverstärker 14 das BBSY-Bit im Monitorkanal M. Ist dieses Bit nicht aktiviert (L-Pegel), so kann es der Baustein 1 setzen. Um eine Kollision beim Zugriff von mehreren Bausteinen 1 im gleichen Pulsrahmen zu verhindern, setzt jeder Baustein 1 zusätzlich eine ihn selbst kennzeichnende Prioritätsinformation, die Prioritätsbits $PR_i$.

Gleichzeitig überprüft jeder Baustein 1, welche Prioritätsbits auf dem Datenbus anstehen. Nur derjenige Baustein, dessen Prioritätsbits sich auf dem Datenbus durchgesetzt haben, erhält den Buszugriff. Dieser jeweilige Master hält das BBSY-Bit für eine fest vorgegebene Anzahl von Pulsrahmen gesetzt. Um zu vermeiden, daß Bausteine mit einer log. Null der Prioritätsbits andere Bausteine mit einer log. 1-Majorität längere Zeit blockieren, muß aufgrund einer rotierenden, intern gesetzten Priorität jeder Master nach erfolgreichem Buszugriff mehrere Rahmen abwarten, bevor er für einen weiteren Buszugriff zugelassen ist.

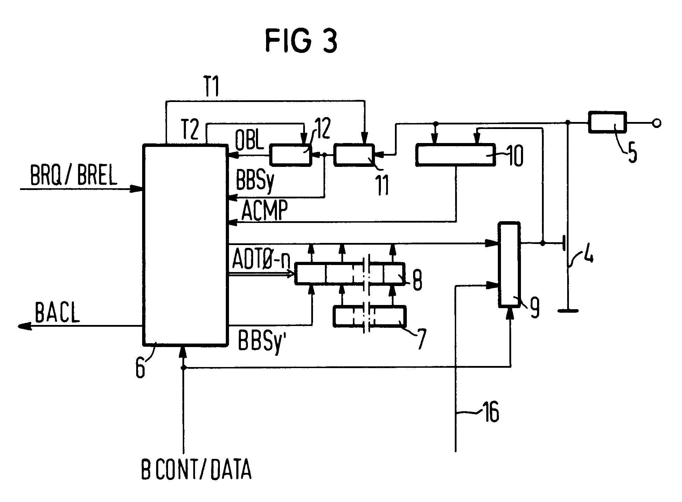

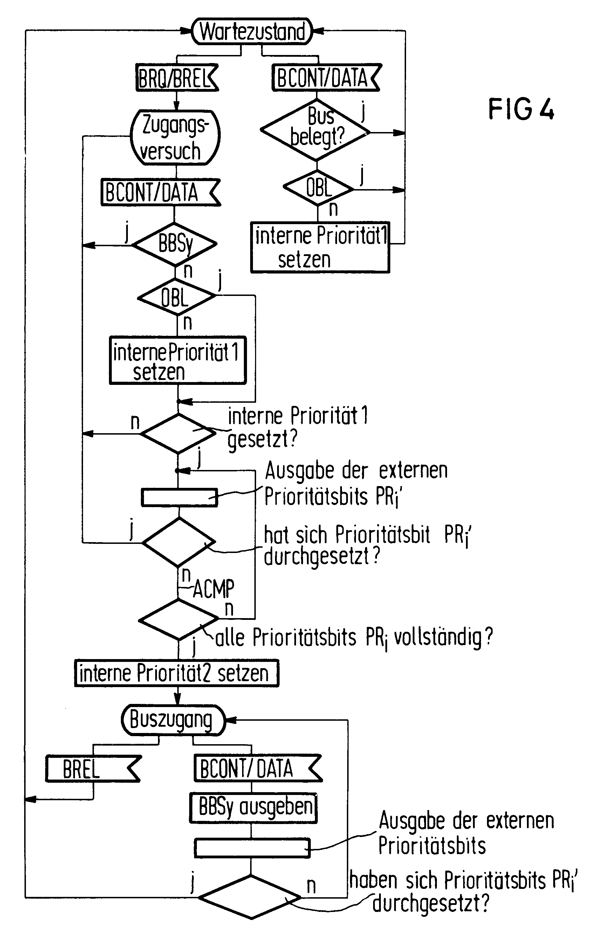

Aus Fig. 3 zusammen mit Fig. 4 ist das Verfahren beispielhaft im einzelnen zu entnehmen. Jeder Baustein 1 enthält eine Zustandskontrolleinheit 6, die beispielsweise aus Flip-Flops aufgebaut sein kann. Ferner weist jede Einheit ein Adressenregister 7, nachgeschaltete Bus-Treiber 8, einen Multiplexer 9 zur Trennung des Monitorkanals M vom Datenkanal D, einen Komparator 10, und zwei hintereinander geschaltete Schieberegister 11, 12 auf. Die Zustandskontrolleinheit 6 dient dazu, drei Zustände zu speichern, einen Wartezustand, einen Zustand, in dem ein Zugang zum Bus 4 versucht wird und einen Zustand, in welchem der betreffende Baustein 1 einen Zugang zum Bus 4 hat.

Ausgehend vom Wartezustand wird von dem Baustein 1 mit einem Signal BRQ der Wunsch nach einem Bus-Zugriff signalisiert. Daraufhin wird der Wartezustand verlassen und der Zustand "Zugangsversuch" eingenommen. Sobald der von einer Bus-Kontrolleinheit (nicht dargestellt) festgelegte Zeitpunkt einer Bus-Vergabe (im Unterschied zu einer beim Signal DATA auszuführenden Datenausgabe) über das Signal BCONT gemeldet wird, wird der Zustand des Buses 4 auf das Vorhandensein des BBSY-Bits überprüft. Wird dabei angezeigt, daß der Bus bereits von einem anderen Baustein besetzt ist, so wird diese Überprüfung im nächsten Zeitschlitz wiederholt.

Ist der Bus jedoch frei, so wird über das Signal OBL geprüft, ob sowohl zum aktuellen als auch zum vergangenen Busvergabezeitpunkt der Bus 4 als frei gemeldet wurde. Diese rotierende Priorität ist dadurch überprüfbar, daß das BBSY-Bit im Fall eines Buszugriffs vom Datenbus 4 unter einem ersten Schiebetakt T1 während des aktuellen Zugriffszyklus in das erste Schieberegister 11 eingeschrieben wird. Von dort wird es unter einem zweiten Schiebetakt T2 im nachfolgenden Zugriffszyklus in das Schieberegister 12 geschrieben. Die Inhalte der beiden Schieberegister 11, 12 (OBL-Bit bzw. BBSY-Bit) legen intern eine erste, höherwertigere Priorität 1 bzw. eine niederwertigere zweite Priorität 2 fest, die - wie oben erwähnt - eine längere Blockade aufgrund der externen Prioritätsbits PR verhindert. Das Vorhandensein des OBL-Bits im zweiten Schieberegister 12 zeigt an, daß der zugehörige Baustein bereits einen Vergabezyklus ausgesetzt hat, und dadurch für einen anderen Baustein die Möglichkeit eines Buszugriffs bestand. Ist dies nicht der Fall, so wird durch Setzen des BBSY-Bits im ersten Schieberegister 11 der aktuelle Zugriffsversuch gespeichert, und auf diese Weise ein weiterer Zugriffsversuch im darauffolgenden Busvergabezeitpunkt verhindert.

Solange der den Zugriff versuchende Baustein 1 nicht die erste, interne Priorität 1 aufweist, werden die eben beschriebenen Versuche im folgenden Pulsrahmen wiederholt. Im anderen Fall werden die in einem Register 7 gespeicherten, dem betreffenden Baustein 1 fest zugeordneten Prioritätsbits $PR_i'$ einzeln über die Steuersignale ADT Ø - n auf den Bus 4 ausgegeben. Anschließend erfolgt jeweils ein bitweiser Vergleich zwischen den auf den Datenbus 4 im Monitorkanal anliegenden Prioritätsbits $PR_i$ mit den im Register 7 gespeicherten Prioritätsbits $PR_i'$. Bei Übereinstimmung wird

jeweils das Vergleichssignal ACMP erzeugt. Wird keine Übereinstimmung festgestellt, so wird der Zugriffsversuch sofort abgebrochen. Werden jedoch alle Prioritätsbits $PR_i$ (i = 0 bis n) erfolgreich auf dem Datenbus 4 ausgegeben, so wird innerhalb des selben Pulsrahmens der Zustand "Buszugang" angenommen, über das Signal BACC angezeigt, und die interne Priorität des betreffenden Bausteins 1 herabgesetzt (interne Priorität 2).

Während des Buszugangs wird über ein von der Zeitkontrolleinheit erzeugtes Steuersignal DATA der Multiplexer 9 vom Monitorkanal M in den Datenkanal D umgeschaltet, und es werden über eine Leitung 16 Daten auf den Datenbus 4 ausgegeben.

Um den Buszugang aufrecht zu erhalten, wird das Signal BBSY' von der Zustandskontrolleinheit 6 des betreffenden Bausteins 1 über den Treiber 8 und den Multiplexer 9 zu Beginn eines jeden Monitorkanals M auf den Datenbus 4 ausgegeben. Dieser Zustand kann so lange bestehen, bis die oben bereits erwähnte, nicht wiedergegebene Einheit ein Signal BREL sendet, welches eine Rückkehr in den Wartezustand und eine Busfreigabe bewirkt.

## Patentansprüche

1. Buszuteilungsverfahren für einen Multiprozessorbus (4), über den integrierte Bausteine (1) gleicher Ordnung im Zeitmultiplexbetrieb bidirektional Daten austauschen können, wobei
   - durch ein Pulsrahmen-Synchronisier-Signal (FS) zwei Zeitkanäle für die Übertragung von Buszugriffs-Steuerinformation (BBSy, PR) und Daten (DA, AD) festgelegt werden,
   - der einen Buszugriff wünschende Baustein (1) den Multiprozessorbus (4) auf eventuell vorhandene Steuerinformation (BBSy) überprüft und, falls der Multiprozessorbus (4) frei ist, eine innerhalb des Bausteins (1) gesetzte Priorität überprüft,
   - der den Buszugriff wünschende Baustein (1) die eigene Steuerinformation (BBSy, PR) setzt, falls der Multiprozessorbus (4) frei ist und die innerhalb des Bausteins (1) gesetzte Priorität höchste Wertigkeit besitzt, und überprüft, ob sich die Steuerinformation (BBSy, PR) auf dem Multiprozessorbus durchsetzt,
   - nach erfolgreichem Setzen der Steuerinformation (BBSy, PR) die Daten (DA, AD) übertragen werden,

   **dadurch gekennzeichnet,**
   - daß für die Übertragung von Buszugriffs-Steuerinformation, welche aus einem Busbelegungscodeelement (BBSy) und aus einer mehrere Bits aufweisenden Prioritätsinformation ($PR_i$) besteht, und Daten (DA, AD) nur eine Leitung vorgesehen ist, und
   - daß die Zeitspanne, in der das Busbelegungscodeelement (BBSy) gesetzt ist, einer gegebenen Anzahl von Pulsrahmen entspricht.

2. Verfahren nach Anspruch 1,
   **dadurch gekennzeichnet,**
   daß die Überprüfung der Steuerinformation bitweise erfolgt, bei negativem Ergebnis sofort abgebrochen und in einem der folgenden Pulsrahmen wiederholt wird.

3. Verfahren nach einem der vorhergehenden Ansprüche,
   **gekennzeichnet** durch
   eine rotierende Priorität innerhalb der einzelnen Bausteine (1).

4. Verfahren nach einem der vorhergehenden Ansprüche,
   **dadurch gekennzeichnet**,
   daß die Bausteine (1) über sog. open Drain/Collector-Stufen an den Multiprozessorbus (4) geschaltet sind.

## Claims

1. Bus arbitration method for a multiprocessor bus (4) via which integrated modules (1) of the same rank can bidirectionally exchange data in time-division multiplex mode, in which
   - two time slots are defined by a pulse frame alignment signal (FS) for the transmission of bus access control information (BBSy, PR) and data (DA, AD),
   - the module (1) wishing a bus access checks the multiprocessor bus (4) for any control information (BBSy) present and, if the multiprocessor bus (4) is free, checks a priority set internally in the module (1),
   - the module (1) wishing the bus access sets its own control information (BBSy, PR) if the multiprocessor bus (4) is free and the priority set internally in the module (1) has the highest significance, and checks whether the control information (BBSy, PR) is prevailing on the multiprocessor bus,
   - the data (DA, AD) are transmitted upon successful setting of the control information (BBSy, PR),

   characterised in that
   - only one line is provided for the transmission of bus access control informa-

tion, which consists of a bus occupation code element (BBSy) and of priority information (PRi) comprising a plurality of bits, and data (DA, AD), and

- in that the period in which the bus occupation code element (BBSy) is set corresponds to a given number of pulse frames.

**2.** Method according to Claim 1, characterised in that the control information is checked bit by bit, and checking is terminated immediately in the event of a negative result and is repeated in one of the following pulse frames.

**3.** Method according to one of the preceding claims, characterised by a revolving priority within the individual modules (1).

**4.** Method according to one of the preceding claims, characterised in that the modules (1) are connected to the multiprocessor bus (4) via so-called open drain/collector stages.

**Revendications**

**1.** Procédé d'affectation de bus pour un bus multiprocesseur (4), au moyen duquel des modules intégrés (1) du même ordre peuvent échanger des données bidirectionnelles dans le fonctionnement multiplex dans le temps, et selon lequel

- deux canaux temporels sont fixés pour la transmission d'informations de commande d'accès au bus (BBSy, PR) et de données (DA,AD), par un signal de synchronisation de trames d'impulsions (FS),
- le module (1), qui désire un accès au bus, contrôle le bus multiprocesseur (4) pour voir s'il contient une information de commande (BBSy) éventuellement présente et, dans le cas où le bus multiprocesseur (4) est libre, contrôle une priorité réglée à l'intérieur du module (1),
- le module (1), qui désire accéder au bus, positionne l'information particulière de commande (BBSy,PR), dans le cas où le bus-multiprocesseur (4) est libre et possède la priorité de valeur maximale réglée à l'intérieur du module (1), et vérifie si l'information de commande (BBSy, PR) traverse le bus-multiprocesseur,
- une fois le positionnement des informations de commande (BBSy,PR) réalisé avec succès, les données (DA,AD) sont transmises,

caractérisé par le fait

- que pour la transmission d'informations de commande d'accès au bus, qui sont constituées par un élément de code d'occupation de bus (BBSy) et par une information de priorité (PR) comportant plusieurs bits, et pour la transmission de données (DA,AD), il n'est prévu qu'une ligne, et
- que l'intervalle de temps, pendant lequel l'élément de code d'occupation de bus (BBSy) est positionné, correspond à un nombre déterminé de trames d'impulsions.

**2.** Procédé suivant la revendication 1, caractérisé par le fait que le contrôle de l'information de commande s'effectue bit-à-bit et, dans le cas d'un résultat négatif, il est immédiatement interrompu et est répété dans l'une des trames d'impulsions suivantes.

**3.** Procédé suivant l'une des revendications précédentes, caractérisé par une priorité tournante à l'intérieur des différents modules (1).

**4.** Procédé suivant l'une des revendications précédentes, caractérisé par le fait que les modules (1) sont raccordés par l'intermédiaire de ce qu'on appelle des étages à drain/collecteur ouvert au bus multiprocesseur (4).

FIG 1

FIG 2

FIG 3

FIG 4